# EUROPEAN PATENT APPLICATION

(11) **EP 4 391 440 A1**
(43) Date of publication of application: **26.06.2024**
(21) Application number: 22214465.1
(22) Date of filing: 19.12.2022
(51) Int. Cl.: H04L 9/00, H04L 9/32

(54) **IMPROVED BLOCKCHAIN SYSTEM AND METHOD**

(71) Applicant: BTQ AG, 9490 Vaduz (LI)
(72) Inventor: KUO, Po-Chun, 30243 Zhubei City (TW); CHENG, Chen-Mou, 30243 Tainan (TW)
(74) Representative: Finnegan Europe LLP

(57) **Abstract**

Method and systems for delaying generation and integration of proofs of validity into a block of a blockchain, operated by a network, each proof of validity associated with a plurality of different transactions are disclosed. The method may comprise receiving a plurality of different transactions, each transaction comprising transactions data and associated validity data; producing a plurality of new blocks on the blockchain, the new blocks comprising the transaction data; generating in parallel, during a predetermined time, one or more proofs of validity associated with one or more blocks from the plurality of new blocks, based on associated validity data; and incorporating, after the predetermined time, the one or more proofs of validity in the blockchain.

## Description

### FIELD OF THE INVENTION

The present disclosure relates generally to blockchain technology, and in particular to a system and a method for dealing with limitations to current blockchain formats with proving systems.

### BACKGROUND OF THE INVENTION

Blockchain networks such as decentralised cryptocurrency networks must verify the legitimacy of transactions before recording them to the blockchain. To validate the authenticity of transactions, some blockchains are using proofs of validity, i.e. summary data obtained by processing generally large data sets associated with transactions, confirming the validity of the latter. Proofs of validity are typically used to enforce privacy and improve scalability. If each block relies on some proof of validity, then the amount of time required to produce the block must be as long as the time required to generate that proof. However, as threats to break the security mechanisms currently applied in blockchain technology are increasingly important, proofs of validity are becoming more and more complex, and depending on the level of security of the underlying proofs the time required to generate those proofs may be increasing. Proof generation may therefore take a duration of time that slows down the production of blockchain blocks, which may affect the usability of the blockchain for certain applications. Accordingly, there is a need to find a way to mask the latency experienced by blockchains with proof systems that require more time to generate proof than to produce a new block.

The present disclosure provides a solution to the above-mentioned problem and can be generalised to any system using proving systems in which proofs of validity are published sequentially and proof generation acts as a bottleneck to the generation of new blocks in a blockchain.

### SUMMARY OF THE INVENTION

An aspect of the disclosure provides a method for delaying generation and integration of proofs of validity into a block of a blockchain in accordance with claim 1. Another aspect of the present invention provides a system for delaying generation and integration of proofs of validity into a block of a blockchain in accordance with claim 9. The foregoing general description and the following detailed description are exemplary and explanatory only and are not restrictive of the claims.

### BRIEF DESCRIPTION OF THE DRAWINGS

Exemplary, non-limiting embodiments of the disclosure will be described with reference to the appended figures in which:
FIG. 1 is a schematic diagram of a networked computer system implementing a traditional blockchain network;
FIG. 2 is a schematic diagram of a blockchain generated by the system of FIG. 1, which illustrates the general structure and properties of a blockchain block;
FIG. 3 is a schematic diagram of a networked computer system in accordance with embodiments of the present disclosure, configured to implement the herein disclosed embodiments;
FIG. 4 is a schematic diagram of an exemplary non-standard blockchain in accordance with embodiments of the disclosure;
FIG. 5 is a schematic comparative diagram illustrating a time-delayed proof of validity of a block of a blockchain in accordance with herein disclosed methods, compared to a known blockchain;
FIG. 6 is a schematic diagram of an alternative networked computer system in accordance with embodiments of the present disclosure, configured to implement the herein disclosed embodiments;
FIG. 7 is a schematic diagram of a second non-standard blockchain in accordance with embodiments of the disclosure;
FIG. 8 is a schematic comparative diagram illustrating an alternative time-delayed proof of validity of a block of a blockchain in accordance with herein disclosed methods, compared to a known blockchain;
FIG. 9 is a process flowchart illustrating how a determination of whether to generate a validity proof in accordance with the herein embodiments may be established, in accordance with some embodiments of the disclosure;
FIG. 10 is a process flowchart illustrating a method of incorporating a validity proof into a blockchain, in accordance with embodiments of the disclosure.

### DETAILED DESCRIPTION

The following detailed description includes references to the accompanying drawings. Wherever possible, the same reference numbers are used in the drawings and the description to refer to the same or similar parts. While several illustrative embodiments are described herein, modifications, adaptations and other implementations are possible. For example, substitutions, additions, or modifications may be made to the components illustrated in the drawings, and the illustrative methods described herein may be modified by substituting, reordering, removing, or adding steps to the disclosed methods. Accordingly, the following detailed description is not limited to the disclosed embodiments and examples. Instead, the proper scope is defined by the appended claims.

Embodiments disclosed herein relate to methods for time-delaying the generation of a proof of validity and integration of the proof of validity into a block of a blockchain, without disrupting or otherwise delaying the creation of new blocks in the blockchain. There herein disclosed embodiments may be implemented in a blockchain network. The below indices provide an outline of the contents of the remaining disclosure.
1. System Overview
2. General structure of blockchains
3. General structure of blockchains blocks
4. Blockchain and proving systems
   Latency introduced by generating proofs of validity
   Solution provided by the present invention
5. Immutable blocks
   Working principle
   Example
6. Mutable blocks
   Working example
   Example
7. Implementations in physical devices
8. Miscellaneous

### 1. System Overview

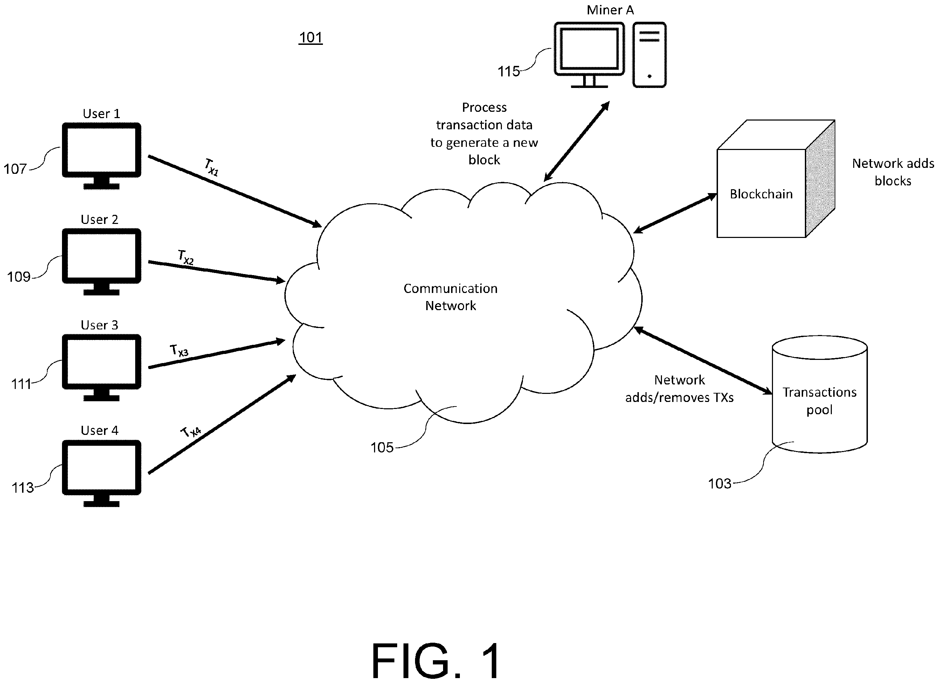

FIG. 1 is a schematic illustration of a networked computer system 101 configured to implement a traditional blockchain. For example, such a blockchain may serve as a digital ledger for electronic transactions, although it is to be appreciated that in principle any type of data may be stored on the blockchain.

Electronic transaction data generated by different users is collected together in a transaction pool repository 103, via a shared communication network 105. For example, first transaction data TX1 associated with a first user at a first user terminal 107, second transaction data TX2 associated with a second user at a second user terminal 109, third transaction data TX3 associated with a third user at a third user terminal 111, and fourth transaction data TX4 associated with a fourth user at a fourth user terminal 113, are sent to the transaction pool 103 via the shared communication network 105. Transaction data received by the transaction pool 103 is stored, and subsequently processed by at least one blockchain miner server 115.

Once a predetermined threshold condition is satisfied, at least one blockchain miner server 115 obtains a plurality of the transaction data (Tx1.... Tx4) stored in the transaction pool 103. For example, the predetermined threshold condition may relate to a predetermined number of electronic transactions stored at the transaction pool 103. The obtained transaction data is bulk processed by at least one blockchain miner server 115. Alternatively, at least one blockchain miner server 115 is provided with the plurality of transaction data once the threshold condition has been satisfied. The obtained, or received transaction data, as the case may be, is processed to generate a new block to be added to an existing blockchain, and/or to generate a block of a new blockchain. The at least one blockchain miner server 115 processes the transaction data to generate a proof of validity associated with the different electronic transactions. The blockchain itself may additionally comprise the transaction data, such that the resulting blockchain comprises both the electronic transaction data and the associated validity proof. This enables the electronic transaction data comprised on the blockchain to be verified using the proof of validity.

To assist the reader's understanding of the disclosure, some background information useful for better understanding the disclosure regarding blockchains, is set out below, followed by a more detailed description of how the delayed proof of validity method of the present disclosure may be implemented by a blockchain miner server.

It is also to be appreciated that whilst the system of FIG. 1 illustrates a single blockchain miner server 115, typically a blockchain network will comprise a plurality of different blockchain miner servers, the different blockchain miner servers competing to generate the next block in the blockchain and the associated validity proof.

### 2. General structure of blockchains

By way of background, a blockchain is a distributed ledger representing all transactions that take place within the network. Transaction data is permanently stored in files called blocks, and blocks are organised linearly in a chain-like structure over time, referred to as a "blockchain." As new transactions take place, new blocks are created and appended to the end of the blockchain. Accordingly, the blockchain provides a ledger comprising a record of all transactions that have occurred over time. This is the fundamental structure of a blockchain.

### 3. General structure of blockchain blocks

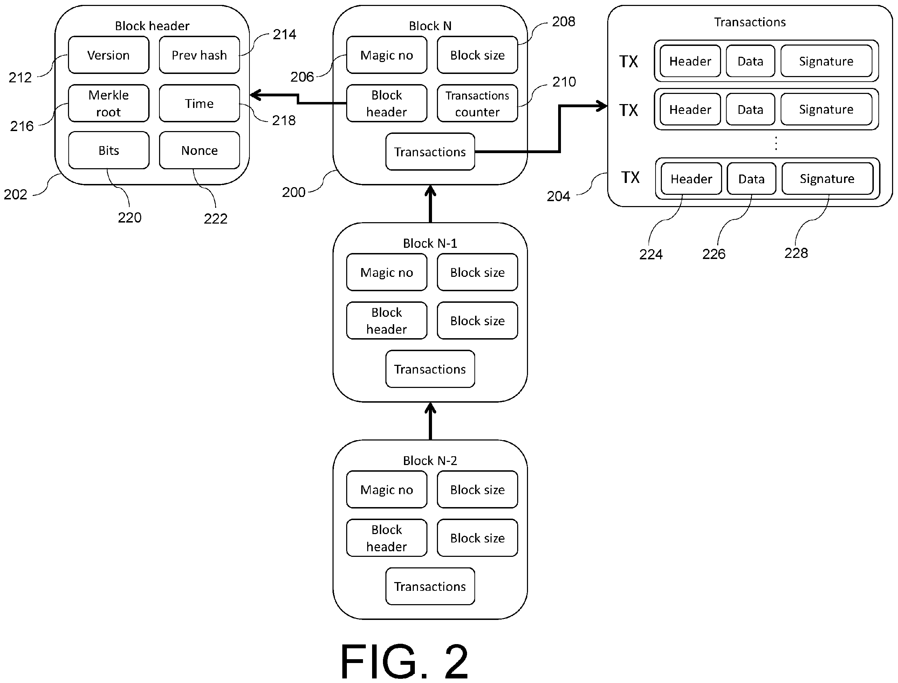

The structure of the blocks comprised in the blockchain is now described. As illustrated in FIG. 2, each block can be separated into three sections:
- Block metadata 200)
- Block header (202)
- Transaction data (204)

Block metadata (200) may comprise the general properties of the current block. This may include, but is not limited to:
- Magic number (file signature) (206) - Indicates the type of data contained in the file. Same for all blocks belonging to the same blockchain
- Size of the current block (208) - Number of bytes following up to the end of block
- Number of transactions in the current block (210)

A block header describes particular properties of the current block such as its time and position. This may include but is not limited to:
- Block version (212) - Specifies current version of the blockchain software
- Hash of previous block header (214) - Reference to the previous block
- Hash of all transactions in the block (216) - Merkle root hash of all transactions in block
- Timestamp (218) - Current block timestamp Unix time (seconds since 1970-01-01T00:00 UTC)
- Bit difficulty (220) - Current mining difficulty target
- Nonce (222) - Number of attempts to solving Proof-of-Work (starts at 0)

### 1. General structure and properties of the transaction data comprising a typical (e.g. Bitcoin) blockchain.

Transactions represent a transfer of some resource between two or more accounts on the blockchain. In some embodiments, the resource may relate to a financial resource, such as a transfer of funds. A transaction references previous transaction outputs as new transaction inputs and dedicates all underlying currency values to new outputs. This is formally realised as a state transition function, where each state represents the ownership status of all digital currency in circulation. It should be noted that a blockchain may comprise any type of transaction data, but for the non-limiting purpose of describing the invention, it is assumed that the blockchain is being used as a ledger for financial transactions. The schematic representation of how transaction data is stored in a block of a typical blockchain is illustrated in FIG. 2. Transaction data is stored in three groups:
- Header (224) - Contains instructions for sending the underlying currency. Includes a hash of a previous transaction and the output of the referenced transaction. The output of the referenced transaction is used as input to the current transaction.
- Data (226) - Recipient public key.
- Digital signature (228) - An ECDSA signature over a hash of a simplified version of the transaction. This is used to prove that the transaction was created by the real owner of the underlying currency involved in the transaction.
Note the one-to-one relationship between each transaction and ECDSA digital signature.

### 4. Blockchain and proving systems

### 2. Latency introduced by generating proofs of validity

Proof generation is with respect to a proving system that allows one to "prove" things about the world without disclosing complete information about what is being proved. This has favourable properties for data privacy systems where users may wish to obscure sensitive information from unintended parties. Such a technique is also useful for reducing space requirements in space-constrained digital systems by providing a proof of validity for some piece of information rather than providing the raw bit string length of information. In these proving systems, proof generation is often a computationally expensive operation leading to potentially prohibitive latencies in downstream operations. Technologies such as distributed ledger technology, or blockchains, are particularly impacted by these latencies. The following is a description of how latency issues are introduced into a blockchain system where the amount of time to generate a proof of validity for some validity data in a block is greater than the amount of time for the blockchain network to generate a new block. Assume that a proving system generates a proof for some piece of information in a block to reduce the number of bytes required to store that information on-chain. This requires that the next block cannot be produced until all of the information in the current block is finalised (i.e. has a proof of validity generated for) since the next block references the current block via a hash of all the data in the current block. This becomes the case for every block thereafter, where the time required to produce a new block is dependent on the amount of time required to generate a proof of validity for the data comprised in the block. Digital signatures are a typical example of validity data a miner needs to inspect to create a proof of validity.

### 3. Solution provided by the present disclosure

The general principle is to enable one or more blockchain blocks to be generated during a period of time required to generate a proof of validity for a previously generated block. In other words, the invention allows for a proof of validity for a particular block to be generated in parallel to the generation of new blocks on the blockchain. This may be achieved by decoupling the proof of validity generation from the generation of blocks on the blockchain. The herein disclosed methods provide at least the same security guarantees as extant blockchain methods, enabling proving systems to be used at the base layer of blockchains without sacrificing security or scalability. At least two embodiments of how decoupling of the proof of validity from block generation are envisaged, and which are described below.

### 5. Immutable blocks

### 4. Working principle

The general principle of this embodiment is to replace the validity data stored in a block with a proof of validity stored in a later block. More specifically, the embodiment omits storing the data related to the proof of validity (validity data) of a block *i* and instead includes the proof of validity for block *i* at a block *i*+*k*±*j*, where *k* is a parameter representing the latency of generating a proof of validity for block i measured with respect to the number of blocks generated since block *i* was generated, and *j* is a variable to dynamically change the window size determined by *k.* During the time *k*±*j* for which a proof of validity is being generated, the original transaction data is accessible by miners in a shared database to allow intermediary blocks to be generated, thus preserving the functionality of the blockchain. Data for which the proof of validity is being generated is temporarily (during the time *k*±*j*) moved off-chain into a publicly available database accessible to the miners, while the proof of validity is being generated. Once the proof of validity has been generated it is stored in the most recently generated block on the blockchain. Note that indies *i, k* and *j* could also relate to time lapses. Whether the time latency required to generate the proof of validity is quantified in terms of the number of blocks generated, or the actual time lapse is immaterial for present purposes.

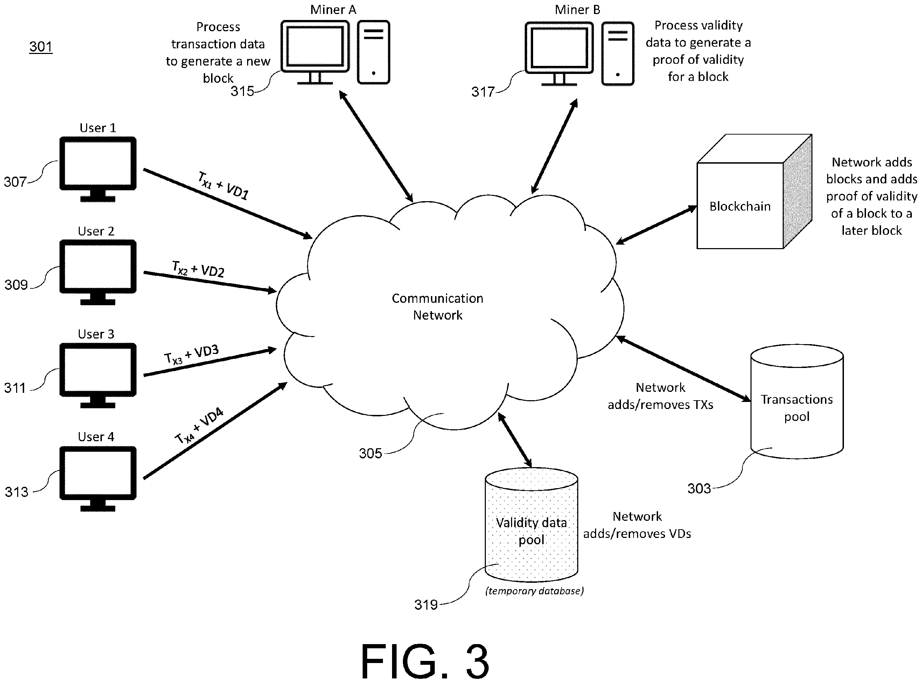

FIG. 3 is a schematic illustration of a networked computer system 301 in which embodiments of the present disclosure may be implemented. FIG. 3 illustrates the networked computer system 301 in which validity data associated with electronic transactions may be integrated together in a blockchain. The illustrated computer system 301 may comprise a blockchain network, in which a ledger of electronic transactions is maintained on a blockchain.

Electronic transaction data generated by different users is collected in a transaction pool repository 303, via a shared communication network 305. A difference with respect to a traditional blockchain network is illustrated here, instead of sending all the global transaction data (e.g. header, data, signature, or any other relevant data) as shown in Figures 1 and 2, users specifically send validity data associated with transactions separately from the transaction data. For example, first transaction data Txi is associated with first data VD1 and a first user at a first user terminal 307; second transaction data T_{X2} is associated with second validity data VD2 and a second user at a second user terminal 309; third transaction data T_{X3} is associated with third validity data VPD3 and a third user at a third user terminal 311; and fourth transaction data T_{X4} is associated with fourth validity data VPD4 and a fourth user at a fourth user terminal 313. The transaction data is sent to the transaction pool 303 via the shared communication network 305, whilst the validity data is sent to the validity data pool 319. Although illustrated as separate repositories, the validity data pool 319 and the transaction pool 303 may relate to a shared repository. In some embodiments the transaction pool 303 and the validity data pool 319 may relate to databases. In some embodiments the database may relate to a decentralised database such as a peer-to-peer database distributed across the network.

Transaction data received by the transaction pool 303 may be stored and subsequently processed by at least one blockchain miner server 315, 317. Validity data received by the validity data pool 319 may be stored and subsequently processed by at least one blockchain miner server 315, 317. In accordance with some embodiments the same miner server may process both the validity data and the transaction data. Alternatively, a different blockchain miner server may process the validity data than the blockchain miner server processing the transaction data. For example, blockchain miner server A 315 may process the transaction data, and blockchain miner server B 317 may process the validity data. For present purposes it is immaterial whether the transaction data and the validity data are processed at the same miner server or at separate miner servers.

It is also to be appreciated that whilst the system of FIG. 3 illustrates two blockchain miner servers 315 and 317, the number of blockchain miner servers comprised in the system is immaterial, provided there is at least one blockchain miner server. In systems comprising two or more blockchain miner servers 315, 317, the different blockchain miner servers may compete to generate the next block in the blockchain and the proof of validity.

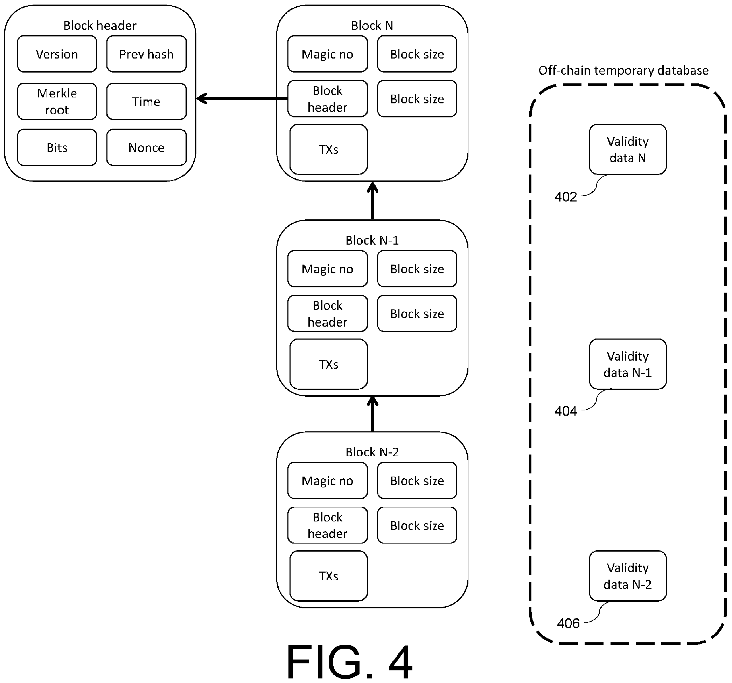

Because the transaction data and the validity data are decoupled, the structure of the blockchain required is non-standard. FIG. 4 is a schematic diagram of a non-standard blockchain structure that may be used in accordance with the disclosed methods. The main difference with respect to a traditional blockchain structure, such as the blockchain of FIG. 2, is that the validity data 402, 404, 406 associated with the transaction is separated from the transaction data, and stored off-chain on a database, which database may relate to the validity data pool 315, as previously disclosed, or may relate to a distributed database. The database may be accessible by all miners. A hash of all the block header is generated and referenced by the next block, as per usual.

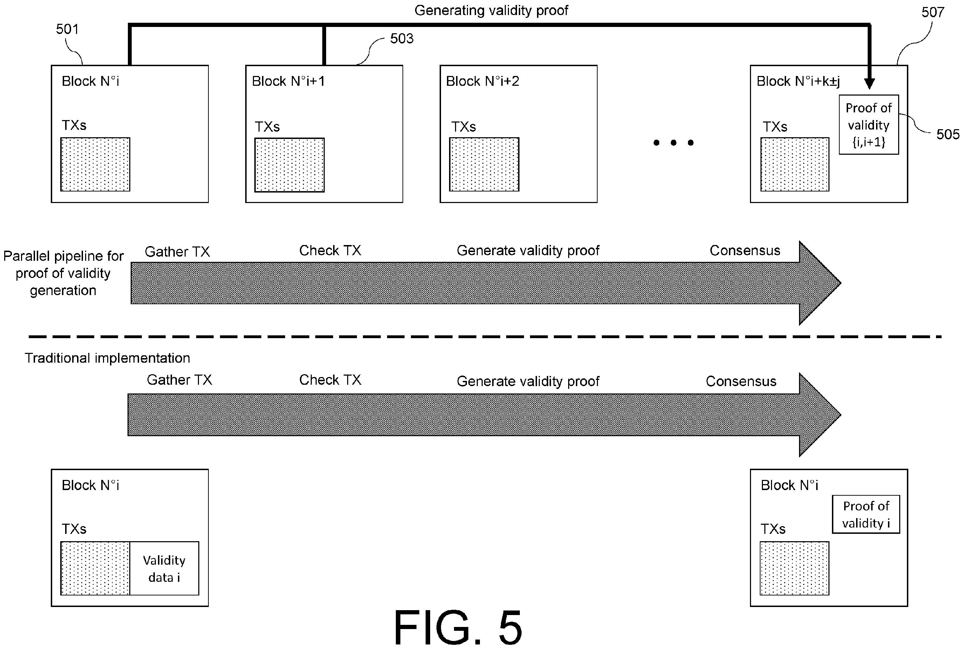

FIG. 5 is a schematic comparative diagram illustrating the schematic structure of blocks in a blockchain where the proof of validity may has been decoupled from block generation, in accordance with herein disclosed methods, compared with a standard blockchain structure where each block comprises its associated proof of validity. Using the blockchain structure of the herein disclosed embodiments, a proof of validity is generated in accordance with the following steps:
1. Blocks (501,503) are generated by the blockchain network containing full block information less the information for which a proof of validity will be generated for (no proof of validity has been provided). Information related to the proof of validity is stored in a public database such as validity data pool 315.
2. A miner generates a proof of validity 505 using the information in the public database, i.e. in the validity data pool 315 for one or more blocks. In some embodiments a plurality of miners may compete with each other to generate the proof of validity.
3. Once the proof of validity has been generated it is included in the block *i*+*k*±*j* 507. Information related to the proof of validity comprised in the validity data pool 315 is removed from the database, once the proof of validity has been added to the block *i*+*k*±*j* 507.
4. Any miner comprised in the network may verify the proof of validity in order to validate the authenticity and integrity of all the data on the network. In particular, miners should have stronger incentives to verify these proofs; if they discover a dishonest entity has produced an invalid proof, then they can simply replace it with a valid proof and claim the reward, as an invalid proof should not be accepted by any participants of the network.
Although Figure 5 illustrates an exemplary embodiment in which a proof of validity is generated for multiple blocks (in this case two), it is understood that this process may be applied to a single block, or to any plurality of blocks.

The block *i*+*k*±*j* is selected in dependence on the amount of time required to generate the proof of validity. For example, since the time required to generate the proof of validity may be known on the basis of available processing power, and the time required to generate a block of a blockchain is also known, it is possible to express the time required to generate the proof of validity in terms of a number of blocks. In this way, it is possible to establish a fixed rule that the proof of validity for a block *i* is generated and included in block *i+k±j.*

This embodiment requires that a miner will eventually generate a proof of validity. This is because the data for which the proof of validity is being generated for is stored off-chain and will eventually need to be published on-chain. This may be realised by making it a required step for proposing block *i*+*k*±*j.*

### 5. Example:

The proposed solution is demonstrated for the scenario of generating proofs of validity for a set of digital signatures. This embodiment moves the digital signatures for all the transactions in the associated block off-chain into a database available to the miners, which may be accessed to generate the proof of validity. In some embodiments the database may be a publicly available database. Once the proof of validity has been generated it is incorporated into the most current block on the blockchain. Assume the current block is *i*, the procedure is as follows:
1. Miners work on generating a proof of validity for *i*^{th} block
Meanwhile for the next *k*±*j* blocks:
2. Users 307, 309, 311, 313 send transactions to the blockchain network for the block at height *i*+*k*±*j.*
3. Miners gather transactions and organise them into a block to propose at height *i*+*k*±*j.*
4. Miners check the validity of the transactions and digital signatures for the block to be proposed at height *i*+*k*±*j.*
5. Miners execute all instructions required to generate the new block to be proposed at height *i*+*k*±*j.*
6. Miners propose the new block *i*+*k*±*j* which includes the proof of validity for the *i*^{th} block to the network.
7. Other miners may verify the validty proof of the new block and form consensus for the block at height *i*+*k*±*j.* If miners find any invalid proof, they will replace it with a valid proof and claim the reward.

The structure of a blockchain block is modified such that signatures are completely excluded from blocks and only a proof of validity of the signatures for the block is included in a block *k*±*j* blocks later. Each block contains the typical information stored in a blockchain block with the exception that the digital signatures associated with the block's transactions are replaced by a proof of validity for the block *k*±*j* blocks prior. A hash of all the information in that block (block hash) is generated and referenced by the next block, as usual. For the duration of time required to generate the validity proof, the digital signatures associated with the transactions in the block are stored in the validity data pool database 319. Once the proof of validity for the digital signatures for a block at height *i* is generated, the proof is included in the block at height *i*+*k*±*j.* Since the digital signatures for block *i* are now on-chain, they are removed from the database 319, which temporarily stores digital signatures while their proofs of validity are being generated. The validity data pool database 319 can thus be seen as a sliding window holding the data (typically during a time *k*±*j*) for which proofs of validity are being generated.

### 6. Mutable blocks

### 6. Working principle

In accordance with another embodiment data stored in a blockchain block is replaced with a proof of validity in the same block (as opposed to being stored in a later block as in the previous embodiment). Data required to generate the validity proof stored in a block *i* is replaced with a proof of validity generated at the block *i*+*k*±*j*, where *k* is a parameter representing the latency of generating a proof of validity measured in the number of blocks and *j* is a variable to dynamically change k. This embodiment requires modifying a previous block without changing the block hash, thus requiring a modification to how the block hash is calculated. Instead of calculating the block hash as the hash of all data available in a block, the data for which a proof of validity is being generated is excluded from the block hash. This provides the flexibility to replace that data with a proof of validity for that data once the proof of validity has been generated while maintaining the ability to add new blocks in the meantime.

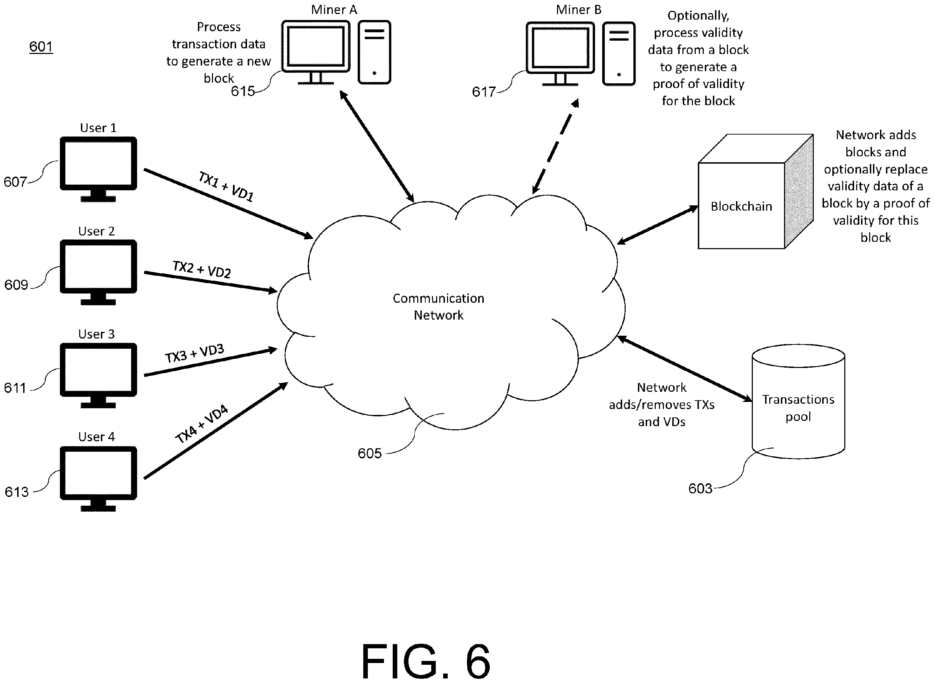

FIG. 6 is a schematic illustration of a networked computer system 601 in which embodiments of the present disclosure may be implemented. FIG. 6 illustrates the networked computer system 601 in which the validity data associated with electronic transactions may be integrated together into a blockchain. The illustrated computer system may comprise a blockchain network, in which a ledger of electronic transactions is maintained on the blockchain, thereby avoiding having to maintain a separate validity data pool 319 as illustrated in FIG.3.

Electronic transaction data generated by different users 607, 609, 611, 613 is collected together in a transaction pool repository 603, via shared communication network 605. In contrast with previous embodiments, instead of sending all the global transaction data (e.g. header, data, signature, or any other relevant data) as shown in Figures 1 and 2, users 607, 609, 611, 613 specifically send the validity data associated with the transactions separately from the transaction data. Similarly, the validity data associated with the transaction may be parsed apart from the transaction data, yet sent together with it. For example, first transaction data TX1 is associated with first validity data VD1 and a first user at a first user terminal 607, second transaction data TX2 is associated with second validity data VD2 a second user at a second user terminal 609, third transaction data TX3 is associated with third validity data VD3 and a third user at a third user terminal 611, and fourth transaction data TX4 is associated with fourth validity data VD4 and a fourth user at a fourth user terminal 613. Both transaction data and validity data are sent to the transaction pool 603 via the shared communication network 605. Although represented as an external database, the transaction data pool 603 may be a shared database (e.g., a peer-to-peer database). Transaction data and validity data received by the transaction pool 603 are stored and subsequently processed by at least one blockchain miner server 615. Another blockchain miner 617 may receive the validity data stored in a block of the blockchain and generate a proof of validity for that block, which may then replace the validity data in the block. Although FIG. 6 illustrates two different miners performing the processing tasks of generating a block and generating a proof of validity separately, it is to be appreciated that a single miner can perform both tasks.

It is also to be appreciated that whilst the system of FIG. 6 illustrates two blockchain miner servers 615 and 617, the number of blockchain miner servers comprised in the system is immaterial, provided there is at least one blockchain miner server, and in some embodiments it is envisaged that the system may comprise a plurality of miners. In systems comprising two or more blockchain miner servers 615, 617, the different blockchain miner servers may compete to generate the next block in the blockchain and the proof of validity, as occurs in conventional blockchain systems.

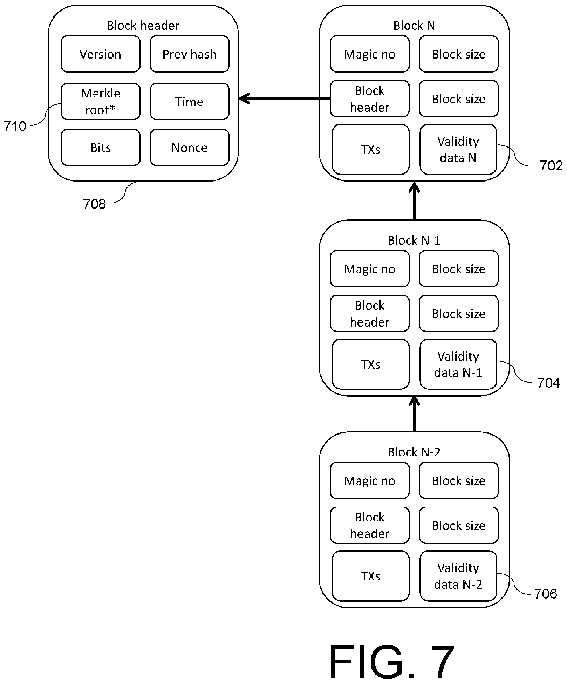

In accordance with the present embodiment, the structure of the blockchain is non-standard. FIG. 7 is a schematic diagram of an exemplary non-standard blockchain structure for use with the present method. In contrast with a traditional blockchain structure, as shown in Figure 2, the validity data 702, 704, 706 associated with the transaction are separated from the transaction data. As a result, the block header 708 is slightly modified, in the sense that the Merkle root hash 710 is the result of a hash of all the transaction data contained in the block less the validity data. A hash of the block header is generated and referenced by the next block, as usual.

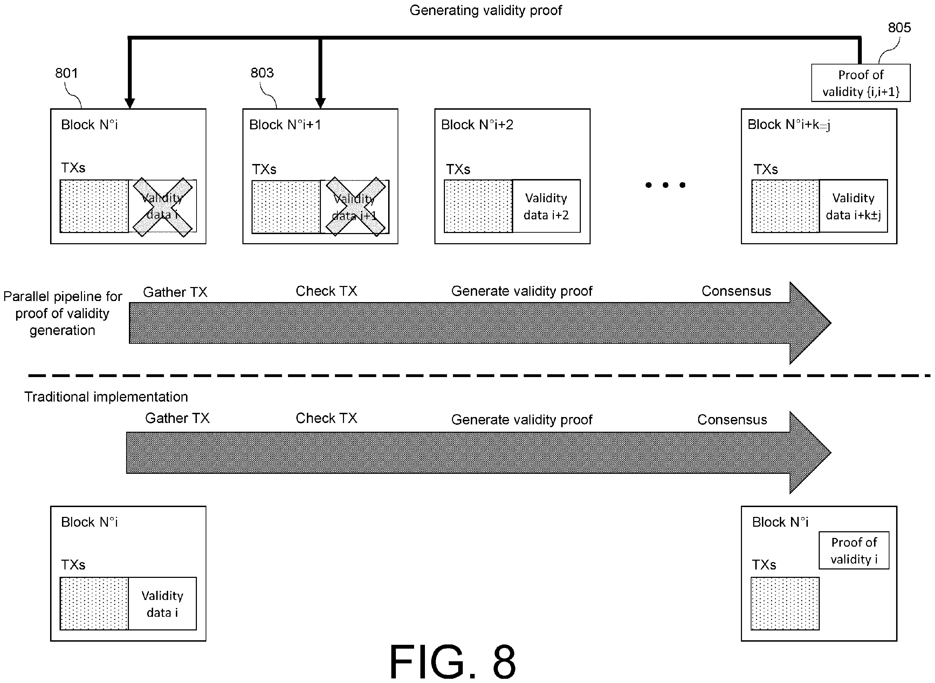

FIG. 8 is a schematic comparative diagram illustrating how another non-standard blockchain that may be used in accordance with the herein disclosed embodiments. Specifically, the illustrated non-standard blockchain may be used by a plurality of miners to generate a proof of validity on the blockchain, in accordance with the herein disclosed embodiments. In FIG. 8, the non-standard blockchain is compared with a standard blockchain structure, and how a proof of validity is currently generated on a blockchain. Using the illustrated non-standard blockchain structure, a proof of validity may be generated in accordance with the following method steps:
1. Blocks 801, 803 are proposed to the network containing full block information. Block hashes are generated using the full block information, less the validity data as recited above.
2. Miners compete to generate proofs of validity 805 for one or more blocks (in this case for the block *i* and the block *i*+*1*)*.*
3. The first miner to generate proofs of validity (after a time *k*±*j*) and proposes to include the generated proofs in the one or more blocks (in this case at block i and block *i*+1).
4. Other miners may verify the validity of the proof

Although Figure 8 illustrates an exemplary embodiment in which a proof of validity is generated for multiple blocks (in this case two), it is understood that this process may be applied to a single block.

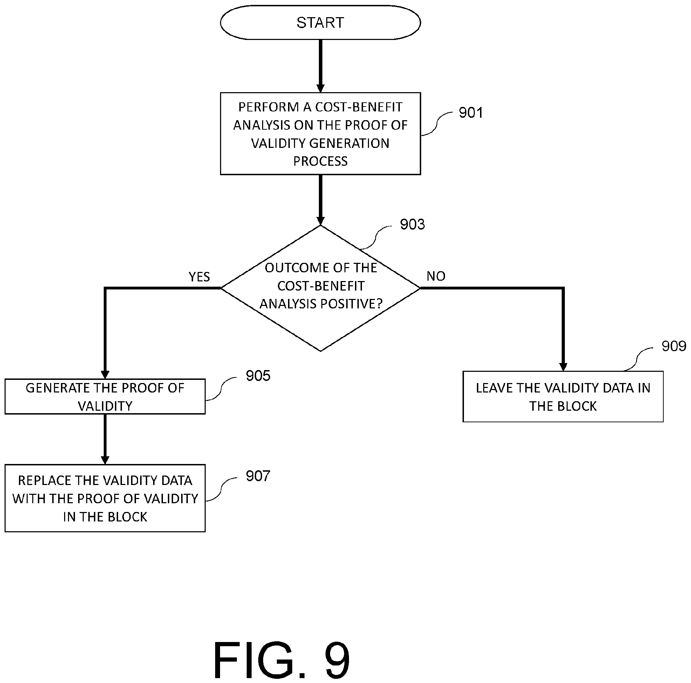

Unlike the prior embodiment, this embodiment does not require that a miner will eventually generate a proof of validity. This is because the data for which the proof of validity is being generated for is still stored on-chain. The decision to generate the proof of validity may be based on a cost-benefit analysis, as illustrated in the flowchart in FIG. 9. At least one miner, such as miner 617, may perform 901 a cost-benefit analysis for generating a proof of validity for a block. If the outcome of the cost analysis is positive at step 903 ("YES"), the miner will generate the proof of validity, at step 905, and replace the validity data with the proof of validity in the block, at step 907. If the outcome of the cost analysis is not positive ("NO") at step 903, then, at step 909, the miner does not modify the content of the block, and instead leaves the validity data in the block. This may be important in scenarios where there is no marginal utility of spending computational power to generate a proof of validity. The cost-benefit analysis can be based on a potential reward for the miner, time efficiency, processing efficiency, storage efficiency, energy consumption, or a combination thereof. Accordingly, it is envisaged that the blockchain may comprise a mixture of blocks containing a proof of validity, and blocks simply containing validity data.

### 7. Example

This embodiment can also be demonstrated in the scenario of generating proofs of validity for a set of digital signatures. Here, the block hash function is modified to exclude the set of digital signatures as input. Assume the current block is block i, the procedure is as follows:
1. Miners continue to propose new blocks in perpetuity, including the set of digital signatures.
2. If at any time a miner generates a proof of validity for a previous block, the set of digital signatures is replaced by the proof of validity in that block.

### 7. Execution on physical devices

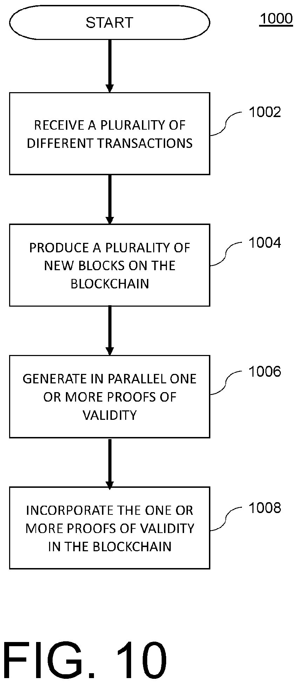

FIG. 10 illustrates how a blockchain miner server 315, 615 interacts with user transactions to delay generation and integration of proofs of validity into a block of the blockchain, in accordance with herein disclosed embodiments. The miner server 315, 615 receives a plurality of different transactions, each transaction comprising transaction data and associated validity data from the communication network 305, 605 sent by a user, such as a user on a user terminal 307, 309, 311, 313, 607, 609, 611, 613, the transactions being stored in the transactions pool 303, 603 as detailed in step 1002 of FIG. 10. Once the number of received transactions reaches a threshold number of transactions, which threshold may be predetermined, the miner server 315, 615 may start to produce one or more new blocks, at step 1004. The new blocks comprise the transaction. The production of new blocks may comply with a proof-of-work protocol; the miner server 315, 615 may generate a cryptographic hash below a target hash to prove to the network 305, 605 that a certain amount of computational effort has been devoted to the received transactions; the miner server 315, 615 proposes the new block to the network 305, 605; and, a consensus is reached which results in the addition of the block to the blockchain. In parallel, during a predetermined time, the miner server 315, 615 validates the incoming transactions, by generating one or more proofs of validity associated with one or more blocks from the plurality of new blocks, based on associated validity data, at step 1006. The miner server 315, 615 incorporates the one or more proofs of validity generated during the preceding step in the blockchain, at step 1008. In an embodiment, the blocks of the blockchain may be immutable. In such a scenario, incorporation of the proofs of validity in the blockchain proceeds as illustrated in FIG. 5 and as described previously in the associated portion of the description. Alternatively, the blocks of the blockchain may be mutable. In such a scenario, incorporation of the proofs of validity in the blockchain proceeds as illustrated in FIG.8, and as previously described in the associated portion of the description.

### 8. Miscellaneous

In the disclosed embodiments, blockchain transactions are still considered immutable in the sense that they are final according to the traditional blockchain consensus protocol. No third party can tamper with any transaction details after they are accepted by the network. The question about immutability/mutability refers exclusively to the structure of the blockchain. In accordance with one of the herein disclosed embodiments the blocks are immutable, in the sense that once a new block is generated, its content can never be changed or altered. In accordance with an alternative embodiment disclosed herein, the blockchain itself is mutable in one specific way, in that validity data in a block may be be replaced by a proof of validity.

The foregoing description has been presented for purposes of illustration. It is not exhaustive and is not limited to precise forms or embodiments disclosed. Modifications and adaptations of the embodiments will be apparent from consideration of the specification and practice of the disclosed embodiments. For example, the described functional modules of the miner may be implemented with hardware and/or software. In addition, while certain components have been described as being coupled to one another, such components may be integrated with one another or distributed in any suitable fashion.

Moreover, while illustrative embodiments have been described herein, the scope includes any and all embodiments having equivalent elements, modifications, omissions, combinations (e.g., of aspects across various embodiments), adaptations and/or alterations based on the present disclosure. The elements in the claims are to be interpreted broadly based on the language employed in the claims and not limited to examples described in the present specification, which examples are to be construed as nonexclusive.

Other embodiments will be apparent from consideration of the specification and practice of the embodiments disclosed herein. It is intended that the specification and examples be considered as example only, with a true scope and spirit of the disclosed embodiments being indicated by the following claims

## Claims

1. A method of generating a proof of validity associated with one or more transactions associated with one or more existing blocks of a blockchain, the method comprising:
receive a plurality of validity data, each validity data being associated with a different transaction associated with the one or more existing blocks of the blockchain;
generate one or more proofs of validity associated with the plurality of validity data; and
incorporate the generated one or more proofs of validity into a block of the blockchain.

2. The method of claim 1, wherein the method comprises:
retrospectively incorporating the generated one or more proofs of validity into an existing block of the blockchain.

3. The method of claim 2, wherein the generated one or more proofs of validity are incorporated into the existing block associated with the transactions in respect of which the one or more proofs of validity are associated.

4. The method of claim 1, wherein the method comprises:
incorporating the generated one or more proofs of validity into a block of the blockchain currently being generated, the one or more proofs of validity enabling verification of transaction data comprised in one or more previously generated blocks comprised in the blockchain.

5. The method of claim 4, wherein the one or more previously generated blocks precede the block currently being generated by a time period equal to or greater than the time required to generate the one or more proofs of validity.

6. The method of claim 4 or 5, wherein the one or more previously generated blocks precede the block currently being generated by a predetermined number of blocks on the blockchain, the time taken to generate the predetermined number of blocks being proportional to a time period equal to or greater than the time required to generate the one or more proofs of validity.

7. The method of any preceding claim, wherein the method comprises:
receiving the plurality of validity data from a database accessible to one or more miners comprised in a blockchain network.

8. The method of any one of claims 1 to 6, wherein the method comprises:
receiving the plurality of validity data from a database distributed across a plurality of nodes comprised in a blockchain network.

9. The method of claim 8, wherein the method comprises:
receiving the plurality of validity data from a peer-to-peer distributed database.

10. A server comprising a processor, the processor being configured to carry out the method of any one of claims 1 to 9.
